# EUROPÄISCHE PATENTSCHRIFT

(11) **EP 3 876 046 B1**
(45) Veröffentlichungstag und Bekanntmachung des Hinweises auf die Patenterteilung: **24.08.2022**
(21) Anmeldenummer: 20160833.8
(22) Anmeldetag: 04.03.2020
(51) Int. Cl.: G05B 19/042, G05B 23/02

(54) **RÜCKANNOTATION VON OPERATORSELEKTIONEN**
REANNOTATION OF OPERATOR SELECTIONS
ANNOTATION DE RETOUR DES SÉLECTIONS OPÉRATEUR

(43) Veröffentlichungstag der Anmeldung: 08.09.2021
(73) Patentinhaber: Siemens Aktiengesellschaft, 80333 München (DE)
(72) Erfinder: Lutz, Benjamin, 76327 Pfinztal (DE)

(56) Entgegenhaltungen:
- EP-A1- 3 567 441
- US-A1- 2010 082 125
- US-A1- 2019 101 910

## Beschreibung

Die Erfindung betrifft ein Leitsystem einer technischen Anlage, insbesondere Fertigungs- oder Prozessanlage, gemäß dem Oberbegriff des Anspruchs 1. Die Erfindung betrifft ferner ein Verfahren zum Betreiben eines Leitsystems einer technischen Anlage, insbesondere Fertigungs- oder Prozessanlage, gemäß Anspruch 5.

Zur Verbesserung der Bedienung und Beobachtung können Operatoren zur Laufzeit einer technischen Anlage so genannte Anwenderselektionen erstellen und optimieren. Zu den Anwenderselektionen gehören beispielsweise Trendanzeigen und Meldefolgeanzeigen. So kann sich ein Operator beispielsweise optimierte Trendanzeigen sukzessive zusammenstellen, mit denen er die Bedienung und Beobachtung verbessern kann.

Derartige Anwenderselektionen sind zwar effizient, jedoch
- zumeist auf den Operatoren beschränkt, der sie erstellt hat,
- rein zur Laufzeit der technischen Anlage nutzbar und nicht zwischen verschiedenen (Engineering-)Projekten verschiebbar,
- einer aufwändigen Pflege und Wartung unterworfen, wenn beispielsweise im Engineering (Prozess-)Objekte verschoben oder gelöscht werden EP3567441 A1 beschreibt ein Prozessleitsystem vorgeschlagen, das versehen ist mit einem Engineering-System zum Projektieren der Hard- und Software-Komponenten eines Prozessleitsystems.

Der Erfindung liegt daher die Aufgabe zugrunde, ein Leitsystem einer technischen Anlage und ein dazugehöriges Verfahren anzugeben, mittels derer ein effizienteres Bedienen und Beobachten der technischen Anlage möglich ist.

Diese Aufgabe wird gelöst durch ein Leitsystem einer technischen Anlage, insbesondere Fertigungs- oder Prozessanlage, mit den Merkmalen des Anspruchs 1. Außerdem wird die Aufgabe gelöst durch ein Verfahren zum Betreiben eines Leitsystems einer technischen Anlage, insbesondere Fertigungs- oder Prozessanlage, mit den Merkmalen des Anspruchs 5.

Das Leitsystem umfasst wenigstens einen Operator Station Server, wenigstens einen Operator Station Client und wenigstens einen Engineering Station Server, wobei der Operator Station Server dazu ausgebildet ist, Visualisierungsinformationen an den Operator Station Client zu übertragen. Zudem ist der Operator Station Client dazu ausgebildet, mittels der Visualisierungsinformationen eine grafische Darbietung für einen Operator der technischen Anlage zu erzeugen. Außerdem ist der Operator Station Client dazu ausgebildet, die grafische Darbietung als Reaktion auf eine Anweisung des Operators an den Operator Station Client anzupassen. Weiterhin ist der Operator Station Client dazu ausgebildet, eine Information bezüglich der Anpassung der grafischen Darbietung an den Operator Station Server zu übermitteln. Zudem ist der Operator Station Server dazu ausgebildet, die von dem Operator Station Client empfangene Information bezüglich der Anpassung der grafischen Darbietung in einem Speicher des Operator Station Servers zu hinterlegen.

Das Leitsystem ist dadurch gekennzeichnet, dass der Operator Station Server dazu ausgebildet ist, die Information bezüglich der Anpassung der grafischen Darbietung an den Engineering Station Server zu übermitteln, um die Information bezüglich der Anpassung der grafischen Darbietung einem Projekteur der technischen Anlage zur Verfügung zu stellen.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Diese Anlagen verfügen jeweils über ein Leitsystem oder zumindest ein computerunterstütztes Modul zur Steuerung und Regelung des ablaufenden Prozesses oder der Produktion. Teil des Leitsystems oder Steuerungsmoduls oder einer technischen Anlage ist zumindest eine Datenbank oder ein Archiv, in dem historische Daten abgespeichert sind.

Unter einem "Operator Station Server" wird vorliegend ein Server verstanden, der zentral Daten eines Bedien- und Beobachtungssystems sowie in der Regel Alarm- und Messwertarchive eines Leitsystems einer technischen Anlage erfasst und Benutzern zur Verfügung stellt. Der Operator Station Server stellt in der Regel eine Kommunikationsverbindung zu Automatisierungssystemen der technischen Anlage her und gibt Daten der technischen Anlage an sogenannte Clients weiter, die zur Bedienung und Beobachtung eines Betriebs der einzelnen Funktionselemente der technischen Anlage dienen. Der Operator Station Server kann über Client-Funktionen verfügen, um auf die Daten (Archive, Meldungen, Tags, Variablen) anderer Operator Station Server zuzugreifen. Dadurch sind Bilder eines Betriebs der technischen Anlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Unter einem "Engineering Station Server" wird vorliegend ein Server verstanden, der dazu ausgebildet ist, verschiedene Hardware- und Software-Projekte für ein Prozessleitsystem einer technischen Anlage zu erstellen, verwalten, archivieren und dokumentieren. Mithilfe von speziellen Software-Entwurfswerkzeugen (Engineering Toolset) sowie vorgefertigten Bausteinen und Plänen kann mittels des Engineering Station Servers ein Zusammenspiel von leittechnischen Geräten und Einrichtungen der technischen Anlage geplant und verwaltet werden. Ein Beispiel hierfür ist ein SIMATIC Manager Server der Firma SIEMENS.

Unter einem Leitsystem wird im vorliegenden Kontext ein computergestütztes, technisches System verstanden, das Funktionalitäten zum Darstellen, Bedienen und Leiten einer technischen Fertigungs- oder Produktionsanlage umfasst. Das Leitsystem umfasst in der Regel Sensoren zur Ermittlung von Messwerten sowie verschiedene Aktoren. Zudem kann das Leitsystem sogenannte prozess- oder fertigungsnahe Komponenten umfassen, die zur Ansteuerung der Aktoren bzw. Sensoren dienen. Darüber hinaus weist das Leitsystem u.a. Mittel zur Visualisierung der technischen Anlage (Operator Station Server und Client) und zu einem Engineering (Engineering Station Server) auf. Unter dem Begriff Leitsystem sind zusätzlich auch weitere Recheneinheiten für komplexere Regelungen und Systeme zur Datenspeicherung und -verarbeitung zu fassen.

Die Visualisierungsinformationen können beispielsweise grafische Repräsentationen von Komponenten der technischen Anlage umfassen. Sie werden von dem Operator Station Server bereit- bzw. zusammengestellt und an den Operator Station Client übertragen, welcher die Visualisierungsinformationen dazu verwendet, eine grafische Darbietung für einen Operator der technischen Anlage zu erzeugen. Diese grafische Darbietung kann beispielsweise auf einem Computermonitor, einem Tablet oder einem Smartphone dem Operator visuell dargeboten werden. Die grafische Darbietung kann beispielsweise ein Anlagebild der technischen Anlage darstellen.

Der Operator kann Änderungen/Anpassungen an dieser grafischen Darbietung vornehmen, indem er Anweisungen an den Operator Station Client richtet. Es kann sich bei einer solchen Anweisung beispielsweise um eine Selektion einer Trendanzeige und/oder einer Meldefolgeanzeige handeln.

Da die zur Laufzeit der technischen Anlage entstehenden Anwenderselektionen bzw. von dem Operator vorgenommenen Anpassungen der grafischen Darbietung der Visualisierungsinformationen zu den "effizientesten" für die Bedienung und Beobachtung der technischen Anlage gehören können, liegt der Kern der Erfindung darin, diese Anpassungen dem Engineering Station Server als reguläre grafische Darbietungen bzw. Anlagenbilder an den geeigneten Stellen bereitzustellen.

Der Operator kann beispielsweise neue (individuelle) Trendanzeigen oder Meldefolgeanzeigen erzeugen und zusammenstellen (Anwenderselektionen), um sein Bedienen und Beobachten zu verbessern. Diese Anwenderselektionen werden dann in einem Speicher des Operator Station Servers persistiert und an den Engineering Station Server weitergeleitet. Es kann dabei eine Auswahlmöglichkeit von dem Operator Station Client bereitgestellt werden, dahingehend, dass der Operator aktiv auswählen kann, ob eine Weiterleitung seiner vorgenommenen Änderungen an den Engineering Station Server erfolgen soll.

Die von dem Operator Station Server an den Engineering Station Server übermittelten Informationen bezüglich der Anpassung der grafischen Darbietung können dem Projekteur (anschließend) im Kontext einer technologischen Hierarchie von Komponenten der technischen Anlage zur Verfügung stehen. Damit stehen diese Informationen für ein Laden eines aus den Informationen erzeugten Anlagenbilds in den Operator Station Server im Kontext eines Engineering-Projekts zur Verfügung.

In der technologischen Hierarchie des Engineering Station Servers können beispielsweise zu projektierende Prozessobjekte einer zu steuernden Prozessanlage, z. B. Prozessobjekte in Form von Messstellen, Tanks, Ventile, Sensoren, Aktuatoren, sowie weitere Objekte des Leitsystems, beispielsweise Anlagenbilder, Strukturordner, sogenannte Continuous Function Charts (CFCs), Sequential Function Charts (SFCs) und Batch-Objekte hierarchisch strukturiert vorliegen.

Die zuvor formulierte Aufgabe wird zudem gelöst durch ein Verfahren zum Betreiben eines Leitsystems einer technischen Anlage, insbesondere Fertigungs- oder Prozessanlage, das wenigstens einen Operator Station Server, wenigstens einen Operator Station Client und wenigstens einen Engineering Station Server umfasst, wobei der Operator Station Server dazu ausgebildet, Visualisierungsinformationen an den Operator Station Client zu übertragen,
und wobei der Operator Station Client dazu ausgebildet ist, mittels der Visualisierungsinformationen eine grafische Darbietung für einen Operator der technischen Anlage zu erzeugen, das Verfahren umfassend:
a) Anpassen der grafischen Darbietung durch den Operator Station Client als Reaktion auf eine Anweisung des Operators an den Operator Station Client,
b) Übermitteln der Information bezüglich der Anpassung der grafischen Darbietung an den Operator Station Server durch den Operator Station Client,
c) Hinterlegen der von dem Operator Station Client empfangenen Information bezüglich der Anpassung der grafischen Darbietung in einem Speicher des Operator Station Servers,
d) Übermitteln der Information bezüglich der Anpassung der grafischen Darbietung an den Engineering Station Server durch den Operator Station Server,
e) Darbieten der Information bezüglich der Anpassung der grafischen Darbietung an einen Projekteur der technischen Anlage.

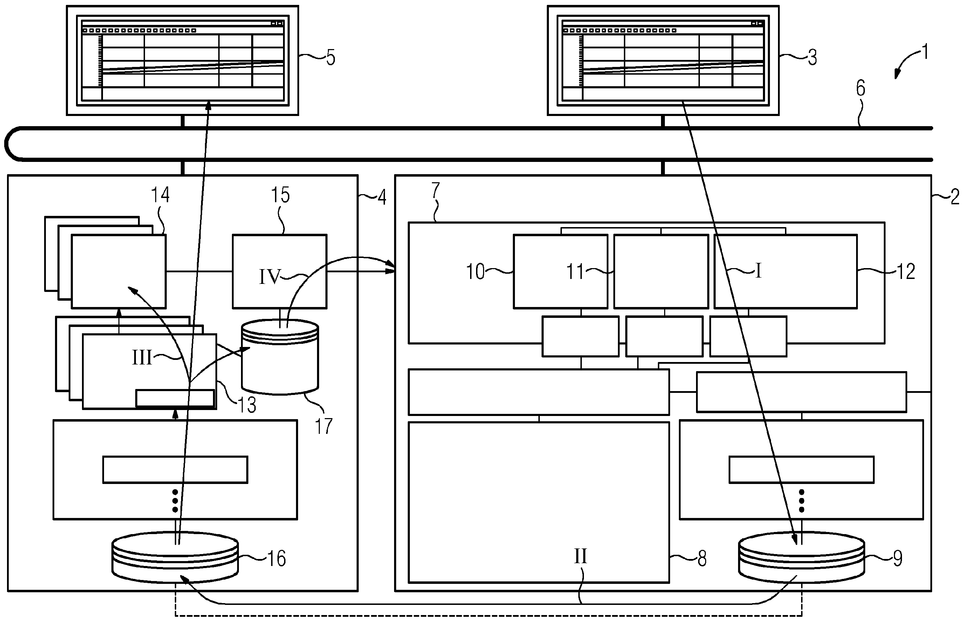

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit der Zeichnung näher erläutert wird.

In der Figur ist ein Teil eines erfindungsgemäßen Leitsystems 1 einer als verfahrenstechnischen Anlage ausgebildeten technischen Anlage dargestellt. Das Leitsystem 1 umfasst einen Server eines Bediensystems bzw. einen Operator Station Server 2 und einen dazugehörigen Operator Station Client 3. Außerdem weist das Leitsystem 1 einen Engineering Station Server 5 und einen dazugehörigen Engineering Station Client 6 auf. Der Operator Station Server 2, der Operator Station Client 3, der Engineering Station Server 4 und der Engineering Station Client 5 sind über einen Terminmalbus 6 miteinander und mit nicht dargestellten weiteren Komponenten des Leitsystems 1 wie einem Prozessdatenarchiv verbunden.

Ein Benutzer bzw. Operator hat mittels des Operator Station Clients 3 mittels des Terminalbus 6 im Kontext eines Bedienens und Beobachtens Zugriff auf den Operator Station Server 2. Analog hierzu hat ein Projekteur mittels des Engineering Station Clients 5 mittels des Terminalbus 6 im Kontext eines Engineerings Zugriff auf den Engineering Station Server 4. Der Terminalbus 6 kann, ohne sich darauf zu beschränken, beispielsweise als Industrial Ethernet ausgebildet sein.

In dem Operator Station Server 2 ist ein Visualisierungsdienst 7 integriert, über den eine Übertragung von Visualisierungsinformationen an den Operator Station Client 3 erfolgt. Zudem weist der Operator Station Server 2 ein Prozessabbild (Process Image) 8, einen lokalen Speicher 9, einen Alarmdienst 10, eine Trendanzeigendienst 11 und einen Benutzerauswahldienst 12 auf. In dem Prozessabbild 8 des Operator Station Servers 2 ist eine Momentaufnahme der (Signal-)Zustände von mit dem Operator Station Server 2 verbundenen Geräten und/oder Applikationen (in der Figur nicht dargestellt) hinterlegt. Der Alarmdienst 10 liest Alarmmeldungen aus dem Prozessabbild 8 aus und erzeugt beispielsweise eine grafische Aggregation der Alarmmeldungen. Der Trendanzeigendienst 11 erzeugt Trendanzeigen aus Prozesswerten, die er aus dem Prozessabbild 8 ausliest. Der Benutzerauswahldienst 12 umfasst eine Datenbank, in welcher Anwenderprofile und persönliche Einstellungen von Operatoren/Bedienern der verfahrenstechnischen Anlage hinterlegt sind. Diese können auch für weitere Operatoren/Bediener zugänglich sein.

In dem Engineering Station Server 4 ist ein Engineeringdienst 13 integriert, mittels dessen ein Projekteur im Kontext eines Engineerings der verfahrenstechnischen Anlage Zugriff auf eine in dem Engineering Station Server 4 hinterlegte technologische Hierarchie 14 hat, um hieraus Prozessobjekte (Typen) oder dergleichen für das Engineering der verfahrenstechnischen Anlage zu entnehmen. Außerdem weist der Engineering Station Server 4 einen Ladedienst 15 und einen ersten Speicher 16 und einen zweiten Speicher 17 auf, auf deren Funktionsweise im Folgenden eingegangen wird.

Ein erfindungsgemäßes Verfahren kann beispielsweise wie folgt ablaufen:
In einem ersten Schritt passt ein Operator eine grafische Darbietung von auf dem Operator Station Client 3 dargestellten Visualisierungsinformationen an. Der Operator bestimmt, dass die vorgenommenen Anwenderselektion für eine Rückannotation in den Engineering Station Server 4 verwendet werden soll. Die von dem Operator Station Client 3 empfangene Information bezüglich der Anpassung der grafischen Darbietung wird in dem Speicher 9 des Operator Station Servers 2 hinterlegt.

Die in dem Speicher 9 zuvor hinterlegte Anwenderselektion wird in einem zweiten Schritt II in den ersten Speicher 16 des Engineering Station Servers 4 gespiegelt.

Aus der empfangenen Anwenderselektion wird in einem dritten Schritt III automatisch ein Anlagenbild mittels des Engineeringdienstes 13 erzeugt, in die technologische Hierarchie 14 eingebettet und in dem zweiten Speicher 17 hinterlegt. Optional kann das automatisch generierte Anlagenbild durch den Projekteur modifiziert werden. Im Zuge der automatischen Generierung wird folgender Kontext berücksichtigt:
- Der Name des Anlagenbildes entspricht folglich dem der zur Laufzeit festgelegten Namen der Anwenderselektion und der Name des Autors des Operatoren, der die Anwenderselektion angelegt oder zuletzt geändert hat.
- Weiterhin wird dem automatisch generierten Anlagenbild auch die eindeutige Identifikationsnummer der Anwenderselektion zugewiesen, so dass auch Aktualisierungen möglich sind. Optimiert beispielsweise ein Operator seine Anlagenselektion zur Laufzeit weiter (z.B. einen weiteren Prozesswert in eine Trendanzeige aufnehmen, eine trendbasierte Alarmschwelle ändern, usw.), so soll diese auch zur Aktualisierung des automatisch generierten Anlagenbildes im Engineering beitragen können - hierfür ist eine eindeutige Identifikation notwendig.

In einem vierten Schritt IV wird das automatisch generierte Anlagenbild von dem Ladedienst 15 aus dem zweiten Speicher 17 geladen und an den Operator Station Server 2 übertragen.

Das zuvor beschriebene generierte Anlagenbild kann automatisch einer Stelle in der technologische Hierarchie 14 im Engineering Station Server 4 eingebettet werden. Durch die automatische Einbettung in der technologische Hierarchie 14 findet implizit auch eine automatische Zuordnung in der Bildhierarchie und eine Zuordnung zu einem Operator Station Server 2 für das Laden statt. Somit ist das automatisch generierte Analgenbild ohne weitere Engineering-Schritte (außer bei Verschiebungen entlang der technologischen Hierarchie 14) auch automatisch im Engineering und zur Laufzeit (nach dem üblichen Generierung und Laden in den jeweiligen Operator Station Server 2) verfügbar.

Abgeleitet wird die Zuordnung des automatisch generierten Anlagenbildes in der technologischen Hierarchie 14 anhand der im Anlagenbild vorhandenen Prozesswerte (z.B. in Trendanzeigen) oder Prozessalarmfilter (z.B. in Meldefolgeanzeigen) der Prozessobjekte. Ist beispielsweise eine Trendanzeige eines Prozesswertes vorhanden, so ist der Prozesswert einem Prozessobjekt eindeutig zugeordnet. Das Prozessobjekt selbst ist durch dessen Pfad in der technologischen Hierarchie 14 an einer konkreten Stelle zugeordnet.

Beispielsweise kann das Prozessobjekt "MonAnS1" (Analogwertmonitor) den Pfad "Anlage 1/Teilanlage 1/ Technische Einrichtung 1/MonAns1" in der technologischen Hierarchie 14 besitzen. Somit wird ein automatisch generiertes Anlagenbild in der technologischen Hierarchie 14 unter demselben Pfad zugeordnet. Sind nun in einem Anlagenbild mehrere Prozesswerte unterschiedlicher Prozessobjekte vorhanden (z.B. in einer gemeinsamen oder mehreren unterschiedlichen Trendanzeigen), so leitet sich die Zuordnung des automatisch generierten Anlagenbildes zu einer Stelle in der technologischen Hierarchie 14 aus der "Schnittmenge" des technologischen Pfades der Prozessobjekte ab. Beispiele hierfür sind:
- "MonAnS1" (Analogwertmonitor) mit Pfad: "Anlage 1/Teilanlage 1/ Technische Einrichtung 1/ MonAns1"
- "PID1" (Regler) mit Pfad: "Anlage 1/Teilanlage 1/ Technische Einrichtung 2/ PID1"
=> Schnittmenge: "Anlage 1/Teilanlage 1/"

Dies bedeutet, dass das automatisch generierte Anlagenbild automatisch (initial) dem Pfad "Anlage 1/Teilanlage 1/" in der technologischen Hierarchie 14 zugeordnet wird. Wie beschrieben, kann dieser Pfad durch einen Projekteur nach der initialen Zuordnung durch einen Projekteur im Engineering auch noch verändert werden.

## Patentansprüche

1. Leitsystem (1) einer technischen Anlage, insbesondere Fertigungs- oder Prozessanlage, das wenigstens einen Operator Station Server (2), wenigstens einen Operator Station Client (3) und wenigstens einen Engineering Station Server (4) umfasst, wobei der Operator Station Server (2) dazu ausgebildet ist, Visualisierungsinformationen an den Operator Station Client (3) zu übertragen,
und wobei der Operator Station Client (3) dazu ausgebildet ist, mittels der Visualisierungsinformationen eine grafische Darbietung für einen Operator der technischen Anlage zu erzeugen,
und wobei der Operator Station Client (3) dazu ausgebildet ist, die grafische Darbietung als Reaktion auf eine Anweisung des Operators an den Operator Station Client (3) anzupassen, und wobei der Operator Station Client (3) dazu ausgebildet ist, eine Information bezüglich der Anpassung der grafischen Darbietung an den Operator Station Server (2) zu übermitteln, und wobei der Operator Station Server (2) dazu ausgebildet ist, die von dem Operator Station Client (3) empfangene Information bezüglich der Anpassung der grafischen Darbietung in einem Speicher (9) des Operator Station Servers (2) zu hinterlegen,
**dadurch gekennzeichnet, dass**
der Operator Station Server (2) dazu ausgebildet ist, die Information bezüglich der Anpassung der grafischen Darbietung an den Engineering Station Server (4) zu übermitteln, um die Information bezüglich der Anpassung der grafischen Darbietung einem Projekteur der technischen Anlage zur Verfügung zu stellen.

2. Leitsystem (1) gemäß Anspruch 1, bei dem die grafische Darbietung ein Anlagenbild der technischen Anlage darstellt.

3. Leitsystem (1) gemäß Anspruch 1 oder 2, bei dem eine Anweisung des Operators eine Selektion einer Trendanzeige und/oder Meldefolgeanzeige umfasst.

4. Leitsystem (1) gemäß einem der vorangegangenen Ansprüche, bei dem die von dem Operator Station Server (2) an den Engineering Station Server (4) übermittelten Informationen bezüglich der Anpassung der grafischen Darbietung dem Projekteur im Kontext einer technologischen Hierarchie (14) von Komponenten der technischen Anlage zur Verfügung stehen.

5. Verfahren zum Betreiben eines Leitsystems (1) einer technischen Anlage, insbesondere Fertigungs- oder Prozessanlage, das wenigstens einen Operator Station Server (2), wenigstens einen Operator Station Client (3) und wenigstens einen Engineering Station Server (4) umfasst, wobei der Operator Station Server (2) dazu ausgebildet, Visualisierungsinformationen an den Operator Station Client (3) zu übertragen,
und wobei der Operator Station Client (3) dazu ausgebildet ist, mittels der Visualisierungsinformationen eine grafische Darbietung für einen Operator der technischen Anlage zu erzeugen, das Verfahren umfassend:
a) Anpassen der grafischen Darbietung durch den Operator Station Client (3) als Reaktion auf eine Anweisung des Operators an den Operator Station Client (3),
b) Übermitteln der Information bezüglich der Anpassung der grafischen Darbietung an den Operator Station Server (2) durch den Operator Station Client (3),
c) Hinterlegen der von dem Operator Station Client (3) empfangenen Information bezüglich der Anpassung der grafischen Darbietung in einem Speicher (9) des Operator Station Servers (2),
d) Übermitteln der Information bezüglich der Anpassung der grafischen Darbietung an den Engineering Station Server (4) durch den Operator Station Server (2),
e) Darbieten der Information bezüglich der Anpassung der grafischen Darbietung an einen Projekteur der technischen Anlage.

6. Verfahren gemäß Anspruch 5, bei dem die grafische Darbietung ein Anlagenbild der technischen Anlage darstellt.

7. Verfahren gemäß Anspruch 5 oder 6, bei dem eine Anweisung des Operators eine Selektion einer Trendanzeige und/oder Meldefolgeanzeige umfasst.

8. Verfahren gemäß einem der Ansprüche 5 bis 7, bei dem die von dem Operator Station Server (2) an den Engineering Station Server (4) übermittelten Informationen bezüglich der Anpassung der grafischen Darbietung dem Projekteur im Kontext einer technologischen Hierarchie (14) von Komponenten der technischen Anlage zur Verfügung gestellt werden.

## Claims

1. Control system (1) of a technical installation, in particular a manufacturing or process installation, which comprises at least one operator station server (2), at least one operator station client (3) and at least one engineering station server (4), wherein the operator station server (2) is embodied to transfer visualization information to the operator station client (3),
and wherein the operator station client (3) is embodied to generate a graphical presentation for an operator of the technical installation by means of the visualization information,
and wherein the operator station client (3) is embodied to adjust the graphical presentation in response to an instruction of the operator to the operator station client (3),
and wherein the operator station client (3) is embodied to transmit an item of information regarding the adjustment of the graphical presentation to the operator station server (2), and wherein the operator station server (2) is embodied to record the information received from the operator station client (3) regarding the adjustment of the graphical presentation in a memory (9) of the operator station server (2),
**characterised in that**
the operator station server (2) is embodied to transmit the information regarding the adjustment of the graphical presentation to the engineering station server (4), in order to make the information regarding the adjustment of the graphical presentation available to a project engineer of the technical installation.

2. Control system (1) according to claim 1, in which the graphical presentation represents an installation image of the technical installation.

3. Control system (1) according to claim 1 or 2, in which an instruction of the operation comprises a selection of a trend display and/or message sequence display.

4. Control system (1) according to one of the preceding claims, in which the information transmitted from the operator station server (2) to the engineering station server (4) regarding the adjustment of the graphical presentation is available to the project engineer in the context of a technological hierarchy (14) of components of the technical installation.

5. Method for operating a control system (1) of a technical installation, in particular a manufacturing or process installation, which comprises at least one operator station server (2), at least one operator station client (3) and at least one engineering station server (4), wherein the operator station server (2) is embodied to transfer visualization information to the operator station client (3),
and wherein the operator station client (3) is embodied to generate a graphical presentation for an operator of the technical installation by means of the visualization information, the method comprising:
a) adjusting the graphical presentation by way of the operator station client (3) in response to an instruction of the operator to the operator station client (3),
b) transmitting the information regarding the adjustment of the graphical presentation to the operator station server (2) by way of the operator station client (3),
c) recording the information received from the operator station client (3) regarding the adjustment of the graphical presentation in a memory (9) of the operator station server (2),
d) transmitting the information regarding the adjustment of the graphical presentation to the engineering station server (4) by way of the operator station server (2),
e) presenting the information regarding the adjustment of the graphical presentation to a project engineer of the technical installation.

6. Method according to claim 5, in which the graphical presentation represents an installation image of the technical installation.

7. Method according to claim 5 or 6, in which an instruction of the operation comprises a selection of a trend display and/or message sequence display.

8. Method according to one of claims 5 to 7, in which the information transmitted from the operator station server (2) to the engineering station server (4) regarding the adjustment of the graphical presentation is made available to the project engineer in the context of a technological hierarchy (14) of components of the technical installation.

## Revendications

1. Système (1) de conduite d'une installation technique, notamment d'une installation de fabrication ou de processus, qui comprend au moins un serveur (2) de station opérateur, au moins un client (3) de station opérateur et au moins un serveur (4) de station d'ingénierie, dans lequel le serveur (2) de station opérateur est constitué pour transmettre des informations de visualisation au client (3) de station opérateur,
et dans lequel le client (3) de station opérateur est constitué pour produire, au moyen des informations de visualisation, une présentation graphique pour un opérateur de l'installation technique,
et dans lequel le client (3) de station opérateur est constitué pour adapter la présentation graphique au client (3) de station opérateur, en réaction à une instruction de l'opérateur, et dans lequel le client (3) de station opérateur est constitué pour transmettre une information se rapportant à l'adaptation de la présentation graphique au serveur (2) de station opérateur, et dans lequel le serveur (2) de station opérateur est constitué pour mettre l'information, reçue par le client (3) de station opérateur et se rapportant à l'adaptation de la présentation graphique dans une mémoire (9) du serveur (2) de station opérateur,
**caractérisé en ce que**
le serveur (2) de station opérateur est constitué pour transmettre l'information concernant l'adaptation de la présentation graphique au serveur (4) de station d'ingénierie, afin de mettre l'information se rapportant à l'adaptation de la présentation graphique à disposition d'un projeteur de l'installation technique.

2. Système (1) de conduite suivant la revendication 1, dans lequel la présentation graphique représente une image de l'installation technique.

3. Système (1) de conduite suivant la revendication 1 ou 2, dans lequel une instruction de l'opérateur comprend une sélection d'une indication de tendance et/ou d'une indication de suivi de message.

4. Système (1) de conduite suivant l'une des revendications précédentes, dans lequel les informations concernant l'adaptation de la présentation graphique, transmises du serveur (2) de station opérateur au serveur (4) de station d'ingénierie, sont mises à disposition du projeteur dans le contexte d'une hiérarchie (14) technologique de composants de l'installation technique.

5. Procédé pour faire fonctionner un système (1) de conduite d'une installation technique, notamment d'une installation de fabrication ou de processus, qui comprend au moins un serveur (2) de station opérateur, au moins un client (3) de station opérateur et au moins un serveur (4) de station d'ingénierie, dans lequel le serveur (2) de station opérateur est constitué pour transmettre des informations de visualisation au client (3) de station opérateur,
et dans lequel le client (3) de station opérateur est constitué pour produire, au moyen des informations de visualisation, une présentation graphique pour un opérateur de l'installation technique, le procédé comprenant :
a) l'adaptation de la présentation graphique par le client (3) de station opérateur au client (3) de station opérateur en réaction à une instruction de l'opérateur,
b) la transmission de l'information se rapportant à l'adaptation de la présentation graphique au serveur (2) de station opérateur par le client (3) de station opérateur,
c) la mise dans une mémoire (9) du serveur (2) de station opérateur de l'information concernant l'adaptation de la présentation graphique reçue par le client (3) de station opérateur,
d) la transmission de l'information se rapportant à l'adaptation de la présentation graphique au serveur (4) de station d'ingénierie par le serveur (2) de station opérateur,
e) la présentation de l'information se rapportant à l'adaptation de la présentation graphique a un projeteur de l'installation technique.

6. Procédé suivant la revendication 5, dans lequel la présentation graphique représente une image de l'installation technique.

7. Procédé suivant la revendication 5 ou 6, dans lequel une instruction de l'opérateur comprend une sélection d'une indication de tendance et/ou d'une indication de suivi de message.

8. Procédé suivant l'une des revendications 5 à 7, dans lequel les informations se rapportant à l'adaptation de la présentation graphique, transmises du serveur (2) de station opérateur au serveur (4) de station d'ingénierie, sont mises à disposition du projeteur dans le contexte d'une hiérarchie (14) technologique de composants de l'installation technique.
